# DEMANDE DE BREVET EUROPEEN

(11) **EP 1 763 163 A1**
(43) Date de publication de la demande: **14.03.2007**
(21) Numéro de dépôt: 06101632.5
(22) Date de dépôt: 14.02.2006
(51) Int. Cl.: H04H 9/00

(54) **Dispositif et procédé d'obtention automatisée d'informations relatives aux audiences de programmes transmis par un réseau de communication**

(30) Priorité: 09.09.2005 FR 0552730
(71) Demandeur: ALCATEL, 75008 Paris (FR)
(72) Inventeur: Papillon, Serge, 75014, PARIS (FR); Squedin, Sylvain, 91620, NOZAY (FR)
(74) Mandataire: Vigand, Régis Louis Michel

(57) **Abrégé**

Un dispositif (DA) est dédié à l'analyse de données d'accès à des programmes (ou contenus) transmis par des réseaux de communication (R) à destination de terminaux de communication (T1-T3) qui leur sont rattachés. Ce dispositif (DA) comprend une mémoire (B) et des moyens de traitement (MT) chargés i) lorsqu'il reçoivent un premier message transmis par un terminal (T1) venant d'accéder à un programme et comportant au moins des premières données représentatives de ce programme, de stocker les premières données dans la mémoire (B) en correspondance de deuxièmes données représentatives de l'instant d'accès au programme et de troisièmes données représentatives du terminal accédant (T1), ii) lorsqu'il reçoivent un second message transmis par un terminal (T1) venant de mettre fin à l'accès à un programme et comportant au moins les premières données représentatives de ce programme, de stocker les premières données dans la mémoire (B) en correspondance de quatrièmes données représentatives de l'instant de fin d'accès au programme et des troisièmes données représentatives du terminal (T1) ayant mis fin à l'accès, et iii) d'accéder à certaines au moins des données stockées dans la mémoire (B) afin de déterminer au moins des informations représentatives des audiences de certains au moins des programmes.

## Description

L'invention concerne les réseaux de communication mobile ou fixe dans lesquels sont transmis des programmes (ou contenus), par exemple de télévision, de musique, de radiophonie, de multimédia, ou de vidéo, à destination de terminaux de communication, et plus précisément l'obtention d'informations relatives à l'accès des terminaux à ces programmes (ou contenus).

En raison de la forte concurrence qui existe entre les diffuseurs de programmes (ou contenus), il est particulièrement important pour eux de disposer d'un maximum d'informations relatives aux audiences réalisées par leurs différents programmes (ou contenus).

Actuellement, il existe principalement deux méthodes permettant d'estimer les audiences des programmes (ou contenus).

La première méthode est purement orale. Elle consiste à interroger un échantillon de personnes dans la rue ou par téléphone. Cette méthode ne peut pas se faire pratiquement en temps réel. En outre, elle est onéreuse du fait qu'elle nécessite de faire appel à du personnel pour interroger les personnes et pour effectuer des comptes rendus. De plus, le nombre de personnes interrogées étant limité, le taux d'erreur des résultats d'audience est élevé.

La seconde méthode est automatisée. Elle consiste à raccorder les téléviseurs d'un échantillon de personnes, censées être représentatives d'une portion choisie d'une population, à des boîtiers d'analyse enregistrant à chaque instant l'identifiant du programme de télévision regardé afin de le transmettre à un équipement distant accompagné d'informations complémentaires comme par exemple les durées d'observation des programmes et les horaires d'accès et de fin d'accès aux programmes. Chaque personne appartenant au foyer équipé dispose de sa propre télécommande et est identifiée dans un segment de marché (enfant, homme, femme, etc...).

Cette seconde méthode est purement qualitative et non quantitative. Par ailleurs, cette seconde méthode impose de coupler en permanence un boîtier à un récepteur de programme, si bien qu'elle n'est absolument pas adaptée aux terminaux de communication mobiles, comme par exemple les téléphones mobiles (ou cellulaires), les ordinateurs portables ou les assistants personnels numériques (ou PDA). En outre, elle est onéreuse du fait qu'elle nécessite de raccorder un boîtier à chaque télévision objet de l'analyse. De plus, le nombre de personnes, objet de l'analyse, étant limité, le taux d'erreur des résultats d'audience est également élevé et peut l'être encore plus lorsque plusieurs boîtiers d'analyse tombent en panne.

Aucune solution connue n'apportant une entière satisfaction, l'invention a donc pour but d'améliorer la situation.

Elle propose à cet effet un procédé dédié à la détermination de données relatives à l'accès à des programmes (ou contenus) transmis par au moins un réseau de communication à destination de terminaux de communication qui lui sont rattachés.

Ce procédé se caractérise par le fait qu'il consiste :
- à faire transmettre à un dispositif d'analyse, par chaque terminal qui accède à un programme, un premier message comportant au moins des premières données représentatives du programme accédé,
- à stocker dans le dispositif d'analyse les premières données en correspondance de deuxièmes données représentatives de l'instant d'accès au programme et de troisièmes données représentatives du terminal accédant,
- à faire transmettre au dispositif d'analyse, par chaque terminal qui met fin à l'accès à un programme, un second message comportant au moins les premières données représentatives de ce programme,
- à stocker dans le dispositif d'analyse les premières données du second message en correspondance de quatrièmes données représentatives de l'instant de fin d'accès au programme et des troisièmes données représentatives du terminal ayant mis fin à l'accès, et
- à analyser certaines au moins des données stockées dans le dispositif d'analyse afin de déterminer au moins des informations représentatives des audiences de certains au moins des programmes.

Le procédé selon l'invention peut comporter d'autres caractéristiques qui peuvent être prises séparément ou en combinaison, et notamment :
- on peut procéder à l'analyse en temps réel ;
- on peut déterminer des caractéristiques (ou profils) des utilisateurs des terminaux, puis on peut analyser certaines au moins des données stockées en fonction de certaines au moins de ces caractéristiques ;
   ➢ on peut déterminer certaines au moins des caractéristiques des utilisateurs à partir des troisièmes données représentatives de leurs terminaux ;
   ➢ les terminaux peuvent intégrer dans les premiers et/ou seconds messages des cinquièmes données représentatives de certaines au moins des caractéristiques des utilisateurs ;
- les premiers messages peuvent contenir les deuxièmes données ;
- les seconds messages peuvent contenir les quatrièmes données ;
- en cas d'impossibilité de transmission d'un premier ou second message consécutivement à sa génération, on peut stocker ce message dans le terminal qui l'a généré afin de procéder à sa transmission en différé ;
- on peut transmettre les premiers et les seconds messages de façon sécurisée.

L'invention propose également un dispositif d'analyse de données relatives à des accès à des programmes (ou contenus) transmis par au moins un réseau de communication à destination de terminaux de communication qui lui sont rattachés.

Ce dispositif se caractérise par le fait qu'il comprend des moyens de mémorisation et des moyens de traitement chargés :
- en cas de réception d'un premier message transmis par un terminal venant d'accéder à un programme et comportant au moins des premières données représentatives du programme accédé, de stocker ces premières données dans les moyens de mémorisation en correspondance de deuxièmes données représentatives de l'instant d'accès au programme et de troisièmes données représentatives du terminal accédant,
- en cas de réception d'un second message transmis par un terminal venant de mettre fin à l'accès à un programme et comportant au moins les premières données représentatives de ce programme, de stocker les premières données dans les moyens de mémorisation en correspondance de quatrièmes données représentatives de l'instant de fin d'accès au programme et des troisièmes données représentatives du terminal ayant mis fin à l'accès, et
- d'accéder à certaines au moins des données stockées dans les moyens de mémorisation pour déterminer au moins des informations représentatives des audiences de certains au moins des programmes.

Le dispositif d'analyse selon l'invention peut comporter d'autres caractéristiques qui peuvent être prises séparément ou en combinaison, et notamment :
- ses moyens de traitement peuvent être chargés d'effectuer certaines au moins des déterminations en temps réel ;
- ses moyens de traitement peuvent être chargés de déterminer les deuxièmes données à réception d'un premier message et/ou les quatrièmes données à réception d'un second message ;
- ses moyens de traitement peuvent être chargés de déterminer des caractéristiques des utilisateurs des terminaux, et d'effectuer certaines au moins des déterminations à partir de certaines au moins des données et en fonction de certaines au moins des caractéristiques déterminées ;
   ➢ ses moyens de traitement peuvent être chargés de déterminer certaines au moins des caractéristiques des utilisateurs des terminaux à partir des troisièmes données représentatives de leurs terminaux, stockées dans les moyens de mémorisation ;
   ➢ ses moyens de traitement peuvent être chargés d'extraire des premiers et/ou seconds messages des cinquièmes données représentatives de certaines au moins des caractéristiques des utilisateurs des terminaux.

L'invention propose également un dispositif de contrôle, pour un terminal de communication rattaché à un réseau de communication transmettant des programmes (ou contenus), comprenant des moyens de contrôle chargés, d'une part, en cas d'accès du terminal à un programme, de générer, à destination d'un dispositif d'analyse du type de celui présenté ci-avant, un premier message comportant au moins des premières données représentatives du programme accédé, et d'autre part, en cas de fin d'accès du terminal au programme, de générer, à destination du dispositif d'analyse, un second message comportant au moins les premières données représentatives de ce programme.

Le dispositif de contrôle selon l'invention peut comporter d'autres caractéristiques qui peuvent être prises séparément ou en combinaison, et notamment :
- ses moyens de contrôle peuvent être chargés d'intégrer dans les premiers messages des deuxièmes données représentatives de l'instant d'accès au programme ;
- ses moyens de contrôle peuvent être chargés d'intégrer dans les seconds messages des quatrièmes données représentatives de l'instant de fin d'accès au programme ;
- en cas d'impossibilité de transmission d'un premier ou second message consécutivement à sa génération, ses moyens de contrôle peuvent être chargés de stocker ce message afin de le transmettre en différé ;
- ses moyens de contrôle peuvent être chargés d'intégrer dans les premiers et/ou seconds messages des cinquièmes données représentatives de caractéristiques de l'utilisateur du terminal ;
- ses moyens de contrôle peuvent être chargés d'ordonner à leur terminal de transmettre les premiers et seconds messages de façon sécurisée.

L'invention est particulièrement bien adaptée, bien que de façon non exclusive, aux réseaux de communication mobiles (ou cellulaires) et aux réseaux de communication fixes comportant des lignes de transmission de données à haut débit, comme par exemple des lignes de type xDSL (ou x Digital Subscriber Line) ou des câbles ou encore des fibres optiques. D'une manière générale, l'invention concerne tout réseau de communication possédant une voix de retour quasiment constante (c'est notamment le cas de certains réseaux satellitaires assurant l'accès à l'Internet).

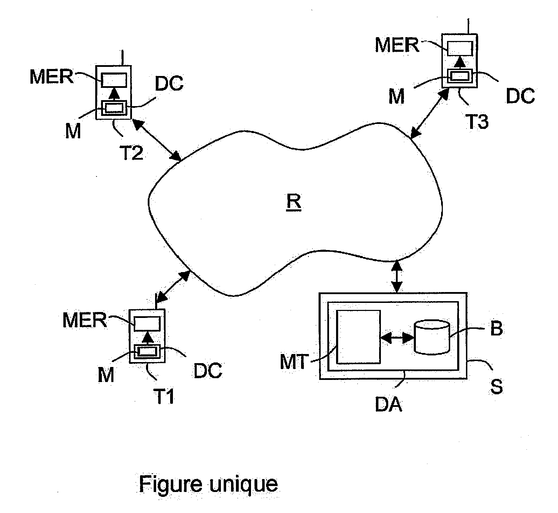

D'autres caractéristiques et avantages de l'invention apparaîtront à l'examen de la description détaillée ci-après, et du dessin annexé, sur lequel l'unique figure illustre de façon très schématique une partie d'un réseau de communication mobile auquel sont connectés, d'une part, des terminaux de communication mobile équipés d'un exemple de réalisation d'un dispositif de contrôle selon l'invention, et d'autre part, un serveur équipé d'un exemple de réalisation d'un dispositif d'analyse selon l'invention. Le dessin annexé pourra non seulement servir à compléter l'invention, mais aussi contribuer à sa définition, le cas échéant.

L'invention a pour objet de permettre l'obtention, automatisée, en temps réel et sans recours à un boîtier externe, d'informations relatives aux audiences réalisées par des programmes (ou contenus) de tout type.

Cette invention s'applique à tout type de terminal de communication, qu'il soit fixe ou mobile, dès lors que le terminal peut être connecté à un réseau de communication fixe (de préférence comportant des lignes de transmission de données à haut débit, comme par exemple des lignes de type xDSL (ou x Digital Subscriber Line) ou des câbles ou encore des fibres optiques), ou mobile (de préférence de type UMTS ou ses variantes et équivalents), éventuellement par l'intermédiaire d'un modem (modulateur/démodulateur). Il pourra par exemple s'agir d'un téléphone mobile (ou cellulaire), d'un assistant personnel numérique (ou PDA), d'un décodeur de programmes de télévision cryptés, d'un équipement de réception de programmes de télévision de type « Set-top box », ou d'un ordinateur fixe ou portable.

Comme indiqué précédemment, l'invention concerne tout type de terminal de communication pouvant se connecter à un réseau de communication possédant une voix de retour quasiment constante (comme par exemple un réseau satellitaire assurant l'accès à l'Internet).

Dans ce qui suit, on considère à titre d'exemple non limitatif que les terminaux de communication (ci-après appelés « terminaux ») sont des téléphones mobiles de type UMTS pouvant se connecter à un réseau de communication mobile (ou cellulaire) afin de recevoir par voie d'ondes des programmes musicaux et/ou des programmes de télévision et/ou des programmes vidéo, par exemple conformément à un standard de type DVB-H (« Digital Video Broadcasting - Handset » - diffusion de vidéos numériques pour des combinés téléphoniques).

Comme cela est illustré sur l'unique figure, l'invention nécessite d'équiper des terminaux Ti (éventuellement tous) d'un dispositif de contrôle DC et d'implanter un dispositif d'analyse DA dans un équipement de communication S, comme par exemple un serveur, connecté à un réseau de communication, qui n'est pas forcément le réseau mobile R auquel sont connectés lesdits terminaux.

II est important de noter que la seule contrainte relative à l'équipement de communication S, dans lequel est implanté le dispositif d'analyse DA selon l'invention, est qu'il soit raccordé à un réseau de communication accessible à des terminaux de communication fixe ou mobile via leur(s) réseau(x) de rattachement. Par conséquent, il peut être raccordé à un réseau privé ou à un réseau mobile ou encore au réseau Internet, dès lors que le(s) réseau(x) de rattachement des terminaux est (sont) couplés directement ou indirectement à son réseau de raccordement.

Par ailleurs, le réseau auquel est raccordé l'équipement de communication S, dans lequel est implanté le dispositif d'analyse DA selon l'invention, pouvant être couplé à des réseaux de types différents (par exemple des réseaux mobiles, des réseaux câblés et des réseaux xDSL), le dispositif d'analyse DA peut être agencé de manière à traiter des données provenant de terminaux de types différents (par exemple des téléphones mobiles et des récepteurs de télévision raccordés à des lignes xDSL ou à des fibres optiques).

On considère dans ce qui suit, à titre d'exemple non limitatif, que le serveur S est raccordé au réseau mobile R auquel sont rattachés les terminaux Ti, et qu'il ne reçoit que des données provenant desdits terminaux Ti (ici des téléphones mobiles).

Par ailleurs, dans l'exemple illustré on a représenté trois terminaux T1 à T3 (i = 1 à 3), mais le nombre de terminaux Ti peut être aussi grand qu'on le souhaite (il suffit en effet d'équiper d'un dispositif de contrôle DC le nombre souhaité de terminaux Ti).

Un dispositif de contrôle DC, selon l'invention, comprend un module de contrôle MC chargé d'intervenir chaque fois que le terminal Ti dans lequel il est implanté accède à un programme (ou contenu) et met fin à l'accès à ce programme (ou contenu).

Le module de contrôle MC peut par exemple être informé de l'accès à un programme et de la fin d'accès à un programme par le module d'affichage MA, au moyen de messages ou d'événements spécifiques auxquels un autre programme peut s'abonner. Dans un cas comme dans l'autre, un module d'envoi de messages doit être prévu dans le module d'affichage MA ou dans un module externe. Un tel module d'envoi de messages peut éventuellement offrir une fonction de filtrage de navigation rapide inter-programmes (ou « zapping »), de préférence configurable. Ainsi, lorsqu'un premier ou un second message est généré, il peut être stocké pendant une durée choisie (configurable) avant d'être communiqué. Par exemple, si le message stocké est un premier message d'accès et qu'un second message de fin d'accès est généré avant l'expiration de la durée de stockage, l'action est considérée comme du zapping, et les deux messages sont détruits sans être communiqués.

En variante, le module de contrôle MC peut être chargé d'observer le fonctionnement du module d'affichage MA afin de détecter chaque accès à un programme et chaque fin d'accès à un programme. Il peut également mettre en oeuvre la fonction de détection de zapping précitée.

Plus précisément, chaque fois que son terminal Ti accède à un programme, le module de contrôle MC génère un premier message comportant au moins des premières données représentatives du programme accédé, comme par exemple son identifiant ou l'identifiant de son canal démission. Il communique ensuite ce premier message au module d'émission/réception MER de son terminal Ti, afin qu'il le transmette au dispositif d'analyse DA (en fait au serveur S dans lequel il est implanté).

Différents média d'échange peuvent être utilisés pour transmettre les premiers et seconds messages. Par exemple, on peut utiliser un canal de signalisation lorsque le dispositif d'analyse DA est situé dans le réseau de l'opérateur d'accès de l'abonné. Dans le cas contraire, on peut par exemple utiliser la voix IP (Internet).

De même, chaque fois que son terminal Ti met fin à l'accès à un programme, le module de contrôle MC génère un second message comportant au moins les premières données représentatives de ce programme. Il communique ensuite ce second message au module d'émission/réception MER de son terminal Ti, afin qu'il le transmette au dispositif d'analyse DA (en fait au serveur S dans lequel il est implanté).

Toute technique peut être utilisée pour différencier un premier message d'un second message. A titre d'exemple illustratif et non limitatif, le module de contrôle MC peut par exemple leur adjoindre un champ de type comportant un bit de valeur 0 ou 1. Par exemple, il attribue la valeur 0 au champ de type d'un premier message et la valeur 1 au champ de type d'un second message.

Il est important de noter que le module de contrôle MC peut être chargé d'ordonner à son terminal Ti de transmettre les premiers et seconds messages de façon sécurisée.

Lorsque le serveur reçoit un premier ou second message il le transmet au dispositif d'analyse DA.

Comme cela est illustré schématiquement sur l'unique figure, le dispositif d'analyse DA comprend des moyens de mémorisation B et un module de traitement MT.

Les moyens de mémorisation B sont chargés de stocker les données qui lui sont communiquées par le module de traitement MT. Ils peuvent se présenter sous n'importe quelle forme, comme par exemple une mémoire ou une base de données (comme c'est le cas ci-après).

Chaque fois que le module de traitement MT reçoit un premier message en provenance d'un terminal Ti (qui vient d'accéder à un programme), il en extrait les premières données qui représentent le programme, puis, il détermine des deuxièmes données représentatives de l'instant d'accès au programme et des troisièmes données représentatives du terminal accédant Ti.

Le temps nécessaire à un premier message pour effectuer le parcours entre un dispositif de contrôle DC et un dispositif d'analyse DA étant très court, notamment au regard de la précision temporelle demandée par les mesures d'audience, et le temps mis par un module de contrôle MC pour générer un premier message, consécutivement à la détection de l'accès à un programme par son terminal Ti, étant également très court, le module de traitement MT peut par exemple identifier l'instant de réception du premier message à l'instant d'accès au programme. Par conséquent, on peut considérer que les deuxièmes données sont représentatives de l'instant de réception du premier message. En variante, le module de traitement MT peut retrancher de l'instant de réception d'un premier message une valeur constante représentative du temps de parcours et du temps nécessaire à la génération du premier message.

Dans une autre variante, on peut également envisager que chaque module de contrôle MC soit agencé de manière à intégrer des deuxièmes données représentatives de l'horaire auquel son terminal Ti a accédé à un programme. Dans ce cas, lorsque le module de traitement MT reçoit un premier message, il n'a plus besoin de déterminer l'instant d'accès au programme, puisqu'il est représenté par les deuxièmes données qu'il contient.

Comme indiqué précédemment, toute technique peut être utilisée pour permettre la différenciation d'un premier message et d'un second message. A titre d'exemple illustratif et non limitatif, on peut accompagner les deuxièmes données d'un bit dont la valeur signale un accès (par opposition à une fin d'accès). La valeur de ce bit peut par exemple être fixée par la valeur du champ de type contenu dans le premier message (par exemple une valeur 0 pour un accès et une valeur 1 pour une fin d'accès).

Les troisièmes données peuvent par exemple (et de façon non limitative) se présenter sous la forme de l'identifiant de communication du terminal accédant Ti (c'est-à-dire celui qui vient de transmettre un premier message). L'identifiant de communication peut par exemple (et de façon non limitative) être le numéro de téléphone dans le cas d'un téléphone mobile, ou l'adresse électronique (ou « e-mail ») dans le cas d'un ordinateur ou d'un récepteur de télévision raccordé à un réseau filaire. D'une manière générale, on peut utiliser toutes données permettant d'identifier de façon unique l'utilisateur d'un service.

Le module de traitement MT stocke les premières données de chaque premier message reçu en correspondance des deuxièmes et troisièmes données, par exemple au sein d'un multiplet.

Chaque fois que le module de traitement MT reçoit un second message en provenance d'un terminal Ti (qui vient de mettre fin à l'accès à un programme), il en extrait les premières données qui représentent le programme, puis, il détermine des quatrièmes données représentatives de l'instant de fin d'accès au programme et des troisièmes données représentatives du terminal accédant Ti.

Comme indiqué précédemment, le temps nécessaire à un second message pour effectuer le parcours entre un dispositif de contrôle DC et un dispositif d'analyse DA étant très court, notamment au regard de la précision temporelle demandée par les mesures d'audience, et le temps mis par un module de contrôle MC pour générer un second message, consécutivement à la détection de la fin d'accès à un programme par son terminal Ti, étant également très court, le module de traitement MT peut par exemple identifier l'instant de réception du second message à l'instant de fin d'accès au programme. Par conséquent, on peut considérer que les quatrièmes données sont représentatives de l'instant de réception du second message. En variante, le module de traitement MT peut retrancher de l'instant de réception d'un second message une valeur constante représentative du temps de parcours et du temps nécessaire à la génération du second message.

Dans une autre variante, on peut également envisager que chaque module de contrôle MC soit agencé de manière à intégrer des quatrièmes données représentatives de l'horaire auquel son terminal Ti a cessé d'accéder à un programme. Dans ce cas, lorsque le module de traitement MT reçoit un second message, il n'a plus besoin de déterminer l'instant de fin d'accès au programme, puisqu'il est représenté par les quatrièmes données qu'il contient.

Comme indiqué précédemment, toute technique peut être utilisée pour permettre la différenciation d'un premier message et d'un second message. A titre d'exemple illustratif et non limitatif, on peut accompagner les quatrièmes données d'un bit dont la valeur signale un accès (par opposition à une fin d'accès). La valeur de ce bit peut par exemple être fixée par la valeur du champ de type contenu dans le second message (par exemple une valeur 1 pour une fin d'accès et une valeur 0 pour un accès).

Le module de traitement MT stocke les premières données de chaque second message reçu en correspondance des troisièmes et quatrièmes données, par exemple au sein d'un multiplet.

Le module de traitement MT est également chargé d'accéder sur requête à certaines au moins des données (premières données (identifiant de programme), deuxièmes données (instant d'accès à un programme), troisièmes données (identifiant de terminal Ti) et quatrièmes données (instant de fin d'accès à un programme)) qui sont stockées dans la base de données B afin de déterminer au moins des informations représentatives des audiences de certains au moins des programmes concernés par ces données.

Quelques exemples schématiques d'analyses de données d'audience sont donnés ci-après à titre purement illustratif.

L'audience d'un programme peut par exemple être définie comme le nombre de personnes qui ont regardé ce programme pendant une durée choisie, par exemple égale à l'intégralité de sa durée, ou pendant un pourcentage choisi de sa durée, par exemple supérieur à 90%.

Pour déterminer l'audience d'un programme, le module de traitement MT peut donc tout d'abord extraire de la base de données B les multiplets qui comportent tous les mêmes premières données représentatives du programme. Puis, il peut déterminer parmi les multiplets extraits ceux qui comportent des troisièmes données représentatives d'un même identifiant de terminal Ti. Ensuite, il peut déterminer la durée d'accès de chaque terminal Ti au programme à partir des deuxièmes et quatrièmes données des multiplets présentant les mêmes troisièmes données. Enfin, il peut par exemple comparer chaque durée déterminée à un seuil afin de retenir les terminaux Ti qui sont associés à une durée supérieure audit seuil. Le nombre de ces terminaux fixe l'audience du programme concerné.

Le module de traitement MT peut être également agencé de manière à analyser les données stockées dans sa base de données B dans le but de déterminer d'autres informations représentatives des audiences de certains au moins des programmes, comme par exemple des temps d'accès moyen et/ou des horaires moyens d'accès et/ou des horaires moyens de fin d'accès et/ou des taux d'audience.

Par exemple pour déterminer les taux d'audience d'un ensemble de programmes, transmis pendant des intervalles de temps dont l'intersection est non nulle, le module de traitement MT peut tout d'abord déterminer l'audience de chacun des programmes de l'ensemble comme décrit précédemment. Puis, il effectue la somme de ces audiences et divise l'audience de chaque programme de l'ensemble par la somme des audiences, ce qui donne les taux d'audience recherchés.

Pour déterminer le temps d'accès moyen à un programme, le module de traitement MT peut par exemple commencer par extraire de la base de données B les multiplets qui comportent tous les mêmes premières données représentatives du programme. Puis, il détermine parmi les multiplets extraits ceux qui comportent des troisièmes données représentatives d'un même identifiant de terminal Ti. Ensuite, il détermine la durée d'accès de chaque terminal Ti au programme à partir des deuxièmes et quatrièmes données des multiplets présentant les mêmes troisièmes données. Enfin, il effectue la somme des durées déterminées et diviser cette somme par le nombre de terminaux ayant accédé au programme concerné, ce qui fixe le temps d'accès moyen au programme.

Pour déterminer l'horaire moyen d'accès à un programme, le module de traitement MT peut par exemple commencer par extraire de la base de données B les multiplets qui comportent tous les mêmes premières données représentatives du programme et des deuxièmes données représentatives des instants d'accès au programme. Ensuite, il peut effectuer la « somme » des instants d'accès et diviser cette somme par le nombre de terminaux ayant accédé au programme concerné, ce qui fixe l'instant d'accès moyen au programme.

Pour déterminer l'horaire moyen de fin d'accès à un programme, le module de traitement MT peut par exemple commencer par extraire de la base de données B les multiplets qui comportent tous les mêmes premières données représentatives du programme et des quatrièmes données représentatives des instants de fin d'accès au programme. Ensuite, il peut effectuer la « somme » des instants de fin d'accès et diviser cette somme par le nombre de terminaux ayant accédé au programme concerné, ce qui fixe l'instant de fin d'accès moyen au programme.

Les traitements de données d'audience présentés ci-avant ne constituent que des exemples schématiques non limitatifs. De nombreux modèles statistiques de traitement des données d'audience existent et sont connus de l'homme de l'art. D'une manière générale, les données d'audience obtenues grâce à l'invention peuvent être stockées afin de faire l'objet, ensuite, de tout traitement statistique (ou autre) adapté aux besoins. Il est par ailleurs important de noter que des résultats en « direct » (comme par exemple le nombre de personnes en train de regarder un programme donné), voire même des résultats en direct ou en différé corrélés avec des caractéristiques d'utilisateurs (comme par exemple le nombre de 15-25 ans en train de regarder un programme donné) peuvent être mis à la disposition des clients du dispositif d'analyse DA.

De nombreux types de caractéristique d'utilisateur (ou des parties au moins de profils d'utilisateurs) peuvent être utiles aux diffuseurs de programmes, notamment pour affiner des analyses d'audience ou de taux d'audience. C'est par exemple le cas de la classe d'age et/ou des centres d'intérêts et/ou des types d'émission préférée et/ou du sexe, et analogues.

Ces caractéristiques d'utilisateurs peuvent être obtenues par le module de traitement MT de différentes manières. Une manière peut consister à agencer le module de traitement MT afin qu'il détermine des caractéristiques choisies (ou des parties au moins de profils) des utilisateurs des terminaux Ti à partir des troisièmes données qui représentent leurs terminaux Ti et qui sont stockées dans la base de données B.

A cet effet, le module de traitement MT peut adresser des requêtes de transmission de caractéristiques choisies d'utilisateurs (identifiés par les identifiants de leurs terminaux Ti) au(x) réseau(x) de rattachement des terminaux Ti qui lui transmettent des premiers et seconds messages. Ainsi, lorsque le module de traitement MT dispose de ces caractéristiques choisies, il peut effectuer certaines au moins des déterminations à partir de certaines au moins des données stockées dans la base de données B et en fonction de certaines au moins des caractéristiques déterminées.

Une autre manière (non exclusive de la précédente) peut consister à faire transmettre par les terminaux Ti des (cinquièmes) données représentatives de caractéristiques de leurs utilisateurs, ces dernières pouvant être éventuellement complétées par d'autres données stockées dans la base de données B et accessibles au module de traitement MT. Dans ce cas, le dispositif de contrôle DC, implanté dans un terminal Ti peut par exemple intégrer dans les premiers et/ou seconds messages des (cinquièmes) données. Le module de traitement MT peut alors utiliser ces (cinquièmes) données, ainsi qu'éventuellement d'autres, pour effectuer certaines de ses analyses. La transmission de tout ou partie de ces caractéristiques d'utilisateurs par les terminaux Ti peut dépendre de la législation du pays et/ou de l'accord préalable des utilisateurs.

Le résultat d'une analyse effectuée par le module de traitement MT se présente sous la forme de données finales qui sont délivrées par son dispositif d'analyse DA sous la forme d'un message.

Dans ce qui précède, il a été supposé que les terminaux Ti étaient en mesure de transmettre leurs premiers et seconds messages en direct. Mais, cela n'est pas toujours possible, notamment lorsque le réseau (GPRS) n'est pas disponible au moment de la génération d'un message alors que le réseau de diffusion de programmes fonctionne. Afin de tenir compte de ces situations, le module de contrôle MC d'un dispositif de contrôle DC, qui est implanté dans un terminal Ti, peut par exemple être agencé de manière à stocker le message non envoyé dans une mémoire dédiée, afin de le transmettre ultérieurement (dès que possible).

Le dispositif de contrôle DC selon l'invention, et notamment son module de contrôle MC, et/ou le dispositif d'analyse DA, et notamment son module de traitement MT et ses moyens de mémorisation B, peuvent être réalisés sous la forme de circuits électroniques, de modules logiciels (ou informatiques), ou d'une combinaison de circuits et de logiciels.

Lorsque le dispositif de contrôle DC est intégralement réalisé sous la forme d'un module logiciel, il peut être soit implanté dans un terminal lors de sa fabrication ou de sa mise en service, soit téléchargé dans un terminal via son réseau de rattachement ou à partir d'un autre type de terminal (comme par exemple un ordinateur individuel (ou PC)) par transfert via un moyen de communication inter terminaux (par exemple de type bluetooth).

L'invention est particulièrement avantageuse dans la mesure où elle offre un procédé de détermination de données d'audience quantitative et éventuellement qualitative (si nécessaire).

L'invention ne se limite pas aux modes de réalisation de dispositif de contrôle, de terminaux de communication, de dispositif d'analyse et de procédé de détermination de données décrits ci-avant, seulement à titre d'exemple, mais elle englobe toutes les variantes que pourra envisager l'homme de l'art dans le cadre des revendications ci-après.

## Revendications

1. Procédé de détermination de données relatives à des accès à des programmes transmis par au moins un réseau de communication (R) à destination de terminaux de communication (Ti) qui lui sont rattachés, **caractérisé en ce qu'**il consiste i) à faire transmettre à un dispositif d'analyse (DA), par chaque terminal (Ti) qui accède à un programme, un premier message comportant au moins des premières données représentatives dudit programme accédé, ii) à stocker dans ledit dispositif d'analyse (DA) lesdites premières données en correspondance de deuxièmes données représentatives de l'instant d'accès du premier message et de troisièmes données représentatives du terminal accédant (Ti), iii) à faire transmettre audit dispositif d'analyse (DA), par chaque terminal (Ti) qui met fin à l'accès à un programme, un second message comportant au moins les premières données représentatives dudit programme, iv) à stocker dans ledit dispositif d'analyse (DA) lesdites premières données du second message en correspondance de quatrièmes données représentatives de l'instant de fin d'accès et des troisièmes données représentatives du terminal (Ti) ayant mis fin à l'accès, et v) à analyser certaines au moins desdites données stockées dans ledit dispositif d'analyse (DA) de manière à déterminer au moins des informations représentatives des audiences de certains au moins desdits programmes.

2. Procédé selon la revendication 1, **caractérisé en ce que** l'on procède à ladite analyse en temps réel.

3. Procédé selon l'une des revendications 1 et 2, **caractérisé en ce que** l'on détermine des caractéristiques des utilisateurs desdits terminaux (Ti) puis on analyse certaines au moins desdites données stockées en fonction de certaines au moins desdites caractéristiques.

4. Procédé selon la revendication 3, **caractérisé en ce que** l'on détermine certaines au moins desdites caractéristiques des utilisateurs à partir des troisièmes données représentatives de leurs terminaux.

5. Procédé selon l'une des revendications 3 et 4, **caractérisé en ce que** lesdits terminaux intègrent dans lesdits premiers et/ou seconds messages des cinquièmes données représentatives de certaines au moins desdites caractéristiques des utilisateurs.

6. Procédé selon l'une des revendications 1 à 5, **caractérisé en ce que** lesdits premiers messages contiennent lesdites deuxièmes données.

7. Procédé selon l'une des revendications 1 à 6, **caractérisé en ce que** lesdits seconds messages contiennent lesdites quatrièmes données.

8. Procédé selon l'une des revendications 1 à 7, **caractérisé en ce qu'**en cas d'impossibilité de transmission d'un premier ou second message consécutivement à sa génération, on stocke ledit message dans le terminal qui l'a généré afin de procéder à sa transmission en différé.

9. Procédé selon l'une des revendications 1 à 8, **caractérisé en ce que** l'on transmet lesdits premiers et seconds messages de façon sécurisée.

10. Dispositif (DA) d'analyse de données relatives à des accès à des programmes transmis par au moins un réseau de communication (R) à destination de terminaux de communication (Ti) qui lui sont rattachés, **caractérisé en ce qu'**il comprend des moyens de mémorisation (B) et des moyens de traitement (MT) agencés i) en cas de réception d'un premier message transmis par un terminal (Ti) venant d'accéder à un programme et comportant au moins des premières données représentatives dudit programme accédé, pour stocker lesdites premières données dans lesdits moyens de mémorisation (B) en correspondance de deuxièmes données représentatives de l'instant d'accès audit programme et de troisièmes données représentatives du terminal accédant (Ti), ii) en cas de réception d'un second message transmis par un terminal (Ti) venant de mettre fin à l'accès à un programme et comportant au moins les premières données représentatives dudit programme, pour stocker lesdites premières données dans lesdits moyens de mémorisation (B) en correspondance de quatrièmes données représentatives de l'instant de fin d'accès audit programme et des troisièmes données représentatives du terminal (Ti) ayant mis fin à l'accès, et iii) pour accéder à certaines au moins desdites données stockées dans lesdits moyens de mémorisation (B) pour déterminer au moins des informations représentatives des audiences de certains au moins desdits programmes.

11. Dispositif selon la revendication 10, **caractérisé en ce que** lesdits moyens de traitement (MT) sont agencés pour effectuer certaines au moins desdites déterminations en temps réel.

12. Dispositif selon l'une des revendications 10 et 11, **caractérisé en ce que** lesdits moyens de traitement (MT) sont agencés pour déterminer lesdites deuxièmes données à réception d'un premier message et/ou lesdites quatrièmes données à réception d'un second message.

13. Dispositif selon l'une des revendications 10 à 12, **caractérisé en ce que** lesdits moyens de traitement (MT) sont agencés pour déterminer des caractéristiques des utilisateurs desdits terminaux (Ti), et pour effectuer certaines au moins desdites déterminations à partir de certaines au moins desdites données et en fonction de certaines au moins desdites caractéristiques.

14. Dispositif selon la revendication 13, **caractérisé en ce que** lesdits moyens de traitement (MT) sont agencés pour déterminer certaines au moins des caractéristiques des utilisateurs desdits terminaux (Ti) à partir des troisièmes données représentatives de leurs terminaux (Ti), stockées dans lesdits moyens de mémorisation (B).

15. Dispositif selon l'une des revendications 13 et 14, **caractérisé en ce que** lesdits moyens de traitement (MT) sont agencés pour extraire desdits premiers et/ou seconds messages des cinquièmes données représentatives de certaines au moins des caractéristiques des utilisateurs desdits terminaux (Ti).

16. Dispositif de contrôle (DC) pour un terminal de communication (Ti) rattaché à un réseau de communication (R) propre à transmettre des programmes, **caractérisé en ce qu'**il comprend des moyens de contrôle (MC) agencés, i) en cas d'accès dudit terminal (Ti) à un programme, pour générer, à destination d'un dispositif d'analyse (DA) selon l'une des revendications 10 à 15, un premier message comportant au moins des premières données représentatives dudit programme accédé, et ii) en cas de fin d'accès dudit terminal (Ti) audit programme, pour générer, à destination dudit dispositif d'analyse (DA), un second message comportant au moins lesdites premières données représentatives dudit programme.

17. Dispositif selon la revendication 16, **caractérisé en ce que** lesdits moyens de contrôle (MC) sont agencés pour intégrer dans lesdits premiers messages des deuxièmes données représentatives de l'instant d'accès au programme.

18. Dispositif selon l'une des revendications 16 et 17, **caractérisé en ce que** lesdits moyens de contrôle (MC) sont agencés pour intégrer dans lesdits seconds messages des quatrièmes données représentatives de l'instant de fin d'accès au programme.

19. Dispositif selon l'une des revendications 16 à 18, **caractérisé en ce que** lesdits moyens de contrôle (MC) sont agencés pour intégrer dans lesdits premiers et/ou seconds messages des cinquièmes données représentatives de caractéristiques de l'utilisateur du terminal (Ti).

20. Dispositif selon l'une des revendications 16 à 19, **caractérisé en ce que** lesdits moyens de contrôle (MC) sont agencés, en cas d'impossibilité de transmission d'un premier ou second message consécutivement à sa génération, pour stocker ledit message afin de le transmettre en différé.

21. Dispositif selon l'une des revendications 16 à 20, **caractérisé en ce que** lesdits moyens de contrôle (MC) sont agencés pour ordonner à leur terminal (Ti) de transmettre lesdits premiers et seconds messages de façon sécurisée.
